# EUROPÄISCHE PATENTANMELDUNG

(11) **EP 3 696 476 A1**
(43) Veröffentlichungstag der Anmeldung: **19.08.2020**
(21) Anmeldenummer: 19156881.5
(22) Anmeldetag: 13.02.2019
(51) Int. Cl.: F24S 80/56

(54) **SOLARKOLLEKTOR MIT VORGESCHALTETER TRANSPARENTER WÄRMEDÄMMUNG VOR SELEKTIVEM ABSORBER UND MIT WÄRMERÜCKFÜHRUNG**

(71) Anmelder: Becker, Friedrich, 74523 Schwäbisch Hall (DE)
(72) Erfinder: Becker, Friedrich, 74523 Schwäbisch Hall (DE)
(74) Vertreter: SSM Sandmair

(57) **Zusammenfassung**

Ein Solarkollektor in Flachbauweise kombiniert eine transparente Wärmedämmung mit einem durch einen Luftspalt getrennten selektiven Absorber und einer Wärmerückführung in den Solarkollektor. Die vom Absorber in Richtung der Deckscheibe sich ausbreitende Wärme wird auf einen in der Gegenrichtung durch die transparente Wärmedämmung strömenden flüssigen Wärmeträger übertragen. Durch die Rückführung von Restwärme, die nicht als Nutzwärme abgegeben worden ist, an den Wärmeträger in der transparenten Wärmedämmung wird die Arbeitstemperatur erhöht.

Der Solarkollektor kann in einer abgewandelten Bauart auch mit einem verdampfbaren Wärmeträger betrieben werden. Mit den Solarkollektoren sind Temperaturen zu erreichen, die im Prozesswärmebereich liegen und auch eine elektrischen Energieerzeugung wirtschaftlich machen.

## Beschreibung

Flache Solarkollektoren sind in ihrem Wirkungsgrad hauptsächlich durch den Wärmeverlust an der Deckscheibe begrenzt. Mit steigender Temperatur des Absorbers steigt auch die Wärmeabgabe durch Konvektion, Wärmeleitung und Wärmestrahlung in Richtung zur Deckscheibe. Damit wird eine Erzeugung von Wärme mit steigender Temperatur des Absorbers, insbesondere bei einer Temperatur, die über 100° C ansteigt, immer unwirtschaftlicher.

Es sind selektive Absorber entwickelt worden, die die Sonnenstrahlung zu einem sehr hohen Anteil absorbieren, aber nur geringe Werte der Abstrahlung im infraroten Bereich aufweisen. Kollektoren mit derartigen Absorbern haben aber bei Temperaturen, die über 100° ansteigen, in der Regel immer noch hohe Verluste durch Konvektionsströmungen und Wärmeleitung.

Eine weitere Möglichkeit, um Wärmeverluste zu verringern, sind transparente Dämmmaterialien wie z.B. die Honeycomb Wärmedämmung. Diese Art der Wärmedämmung beeinträchtigt aber die Permeabilität der Sonnenstrahlung in beträchtlichem Maß und ermöglicht keine besonders hohen Temperaturen.

Es existieren auch bereits Vorrichtungen, in denen die am Absorber erzeugte und von dort zur Deckscheibe hin sich ausbreitende Wärme durch ein Wärmeträgermedium aufgenommen wird, das von einem Raum unter der Deckscheibe in Richtung des Absorbers strömt. Das geschieht z.B. durch einen Luftstrom, der aus einem Raum unterhalb der Deckscheibe in Richtung Absorber strömt und z.B. durch Öffnungen im Absorber abgezogen werden kann. Der Zwischenraum zwischen Deckscheibe und Absorber kann auch mit einer transparenten Wärmedämmung wie z.B. eine Schicht von Glasröhren gefüllt sein. Nachteilig ist, dass wegen der geringen Wärmekapazität von Luft in solchen Kollektoren recht große Mengen von Luft umgewälzt werden müssen. Außerdem sind die erreichten Temperaturen bei genügendem Wirkungsgrad nicht besonders hoch.

Es besteht auch die Möglichkeit, ein flüssiges Wärmeträgermedium zu verwenden, auf das Wärme im Gegenstrom zur sich ausbreitenden Wärme übertragen wird. Das geschieht z.B. im Schichtspeichersolarkollektor DE 197 53 380 A1, bei dem aufeinander gelegte Schichten von Hohlkörperplatten von einem flüssigen Wärmeträgermedium nacheinander durchströmt werden. Auch bei dieser Konstruktion besteht noch ein erheblicher Wärmedurchgang in Richtung Deckscheibe aufgrund von Wärmeleitung.

Die Erfindung hat es sich zur Aufgabe gemacht, die mit steigender Temperatur des Absorbers immer stärker ansteigenden Verluste weitestgehend zu vermeiden.

Die Aufgabe wird durch einen Solarkollektor in Flachbauweise gelöst, in welchem wenigstens ein Wärmeträger zirkuliert und unter anderem über einen Absorber Wärme aufnimmt und diese Wärme im Anschluss über einen Wärmetauscher als Nutzwärme abgibt. Die Zirkulation des Wärmeträgers kann durch eine oder mehrere Pumpen und/oder durch die Thermo-Siphon Wirkung und/oder durch die Schwerkraft bewirkt werden. Der Wärmeträger kann eine Mischung aus verschiedenen Alkoholen und/oder Wasser und/oder Glykolen sein. Der erfindungsgemäße Solarkollektor kann einen oder mehrere Wärmeträgerkreisläufe aufweisen. Die verschiedenen Wärmeträgerkreisläufe können untereinander fluidkommunizierend sein oder fluidisch voneinander getrennt sein.

Der Solarkollektor weist eine strahlungsquellenzugewandte und eine strahlungsquellenabgewandte Seite auf, wobei die Strahlungsquelle bevorzugter Weise durch die Sonne gebildet wird. Die Richtung von der strahlungsquellenzugewandten Seite zur der strahlungsquellenabgewandten Seite wird als Tiefe des Solarkollektors verstanden. Vorzugsweise ist der Solarkollektor so ausgerichtet, dass die Tiefenrichtung parallel zu der Richtung der einfallenden Strahlung ist. Entsprechend versteht man unter der Oberseite des Solarkollektors die strahlungsquellenzugewandte Seite, während die Unterseite die strahlungsquellenabgewandte Seite des Solarkollektors ist. Somit bedeutet unterhalb in Richtung von der strahlungsquellenzugewandten Seite des Solarkollektors in Richtung der strahlungsquellenabgewandten Seite des Solarkollektors, d.h. von der Oberseite in Richtung der Unterseite.

Handelt es sich bei der Strahlungsquelle, wie bevorzugt, um die Sonne kann der Solarkollektor so aufgestellt sein, dass der Solarkollektor durch einen Mechanismus dem Lauf der Sonne folgt, so dass die Strahlung senkrecht auf die sonnenzugewandte Seite des Solarkollektors trifft. Der Solarkollektor kann aber auch fest installiert, zum Beispiel auf einem Hausdach, betrieben werden, so dass er nicht dem Sonnenlauf folgt und die Strahlung nicht senkrecht auf den Solarkollektor trifft. Für die Beschreibung des Solarkollektors soll im Folgenden angenommen werden, dass die Strahlung senkrecht auf die strahlungsquellenzugewandte Seite des Solarkollektors trifft, d.h. dass die einfallende Strahlung parallel zu der Tiefenrichtung des Solarkollektors ist.

Die Breite und die Länge des Solarkollektors bilden bevorzugt zusammen mit der Tiefe ein orthogonales System, wobei unter der Längsrichtung bzw. der Länge des Solarkollektors die Richtung verstanden wird, in welche sich der Solarkollektor für gewöhnlich von der Horizontalen abhebt. Das bedeutet die Horizontale und die Längsrichtung des Solarkollektors bilden, bei gebräuchlicher Installation des Solarkollektors, eine schiefe Ebene. In bevorzugten Ausführungen erstreckt sich der Solarkollektor in Längsrichtung weiter als in Breitenrichtung.

Der Solarkollektor umfasst eine Deckscheibe, welche sich im insbesondere in Längsrichtung und Breitenrichtung des Solarkollektors erstreckt ist bevorzugt transparent und fluidundurchlässig. Die Deckscheibe hat in etwa dieselbe Breite und dieselbe Länge wie der Solarkollektor. Unterschiede in der Breite und der Länge sind durch ein Gehäuse bedingt, das den Solarkollektor an allen Seiten bis auf der Seite der Deckscheibe umgibt. Die Deckscheibe ist auf der strahlungsquellenzugewandten Seite des Solarkollektors angebracht. In bevorzugten Ausführungen weist das Gehäuse eine Wärmedämmung auf. Die Wärmedämmung des Gehäuses soll seitliche Wärmeverluste des Solarkollektors, d.h. Verluste in Längsrichtung, Breitenrichtung und in Richtung der strahlungsquellenabgewandten Seite, durch Konvektion, Wärmeleitung und Wärmestrahlung unterbinden.

Die Deckscheibe ist aus einem transparenten, lichtdurchlässigen Material gebildet. In bevorzugten Ausführungen ist die Deckscheibe aus Glas. Die Deckscheibe kann aber auch aus einem Kunststoff, z.B. Polymethylmethacrylat bzw. Acrylglas, gebildet sein.

Unterhalb der Deckscheibe, d.h. in Richtung von der strahlungsquellenzugewandten Seite des Solarkollektors in Richtung der strahlungsquellenabgewandten Seite des Solarkollektors, befindet sich ein erster Zwischenraum. Der erste Zwischenraum wird in der strahlungsquellenzugewandten Seite von der Deckscheibe begrenzt und in der strahlungsquellenabgewandten Seite von einer transparenten Wärmedämmung. An den übrigen Seiten wird der erste Zwischenraum durch ein Gehäuse des Solarkollektors begrenzt. In bevorzugten Ausführungen ist der erste Zwischenraum mit einem beispielsweise flüssigen Wärmeträger gefüllt.

Unterhalb der transparenten Wärmedämmung, d.h. in Richtung von der strahlungsquellenzugewandten Seite des Solarkollektors in Richtung der strahlungsquellenabgewandten Seite des Solarkollektors, befindet sich bevorzugt ein zweiter Zwischenraum. Der zweite Zwischenraum wird auf der strahlungsquellenzugewandten Seite von der transparenten Wärmedämmung begrenzt und auf der strahlungsquellenabgewandten Seite von einer Zwischenschicht. An den übrigen Seiten wird der zweite Zwischenraum durch ein Gehäuse des Solarkollektors begrenzt. In bevorzugten Ausführungen ist der zweite Zwischenraum mit einem beispielsweise flüssigen Wärmeträger gefüllt, welcher bevorzugt aus dem ersten Zwischenraum durch die transparente Wärmedämmung in den zweiten Zwischenraum strömt.

Der erste Zwischenraum und der zweite Zwischenraum erstrecken sich in ihrer Breite und ihre Länge insbesondere über einen Großteil der Breite und der Länge des Solarkollektors. Über einen Großteil bedeutet, dass der erste Zwischenraum und der zweite Zwischenraum seitlich, d.h. in Längsrichtung und in Breitenrichtung von dem Gehäuse des Solarkollektors begrenzt werden, d.h. der Solarkollektor ist durch das Gehäuse bedingt länger und breiter als der erste Zwischenraum und der zweite Zwischenraum. Das Gehäuse wird bevorzugt durch eine Unterseite und vier Seitenwände gebildet. Die Seitenwände sind bevorzugt mit der Unterseite fest verbunden, so dass Unterseite und Seitenwände ein napfförmiges Gehäuse bilden. Das Gehäuse wird an der Oberseite, d.h. auf der strahlungsquellenzugewandten Seite des Solarkollektors bevorzugterweise von der Deckscheibe verschlossen. Gehäuse und Deckscheibe bilden quasi einen Topf mit Deckel, wobei Gehäuse und Deckscheibe vorteilhafterweise fluidundurchlässig miteinander verbunden sind.

Der erste Zwischenraum verfügt über einen Einlass, durch welchen der Wärmeträger in den ersten Zwischenraum gelangt. Analog dazu verfügt der zweite Zwischenraum über einen Auslass, durch welche der Wärmeträgeraus dem zweiten Zwischenraum ausströmen kann. Der erste Zwischenraum und der zweite Zwischenraum sind über die transparente Wärmedämmung fluidkommunizierend miteinander verbunden, so dass der Wärmeträger aus dem ersten Zwischenraum über die transparente Wärmedämmung in den zweiten Zwischenraum strömen kann. Die Strömungsrichtung durch die transparente Wärmedämmung ist dabei bevorzugt senkrecht von der strahlungsquellenabgewandten Seite der Deckscheibe in Richtung des zweiten Zwischenraums, d.h. in Richtung des Absorbers bzw. parallel zu der einfallenden Strahlung von der Strahlungsquelle. Der Begriff senkrecht soll die Strömungsrichtung nicht auf exakt 90° zu der transparenten Wärmedämmung beschränken. Vielmehr soll der Begriff senkrecht zum Ausdruck bringen, dass die Strömungsrichtung in einem Winkel zwischen 70° und 110° zu der transparenten Wärmedämmung steht, bevorzugterweise in einem Winkel zwischen 80° und 100°. Während die Strömung in der transparenten Wärmedämmung senkrecht zu der Deckscheibe verläuft, strömt der Wärmeträger in dem ersten Zwischenraum und dem zweiten Zwischenraum vorwiegend parallel zu der Deckscheibe. D.h. die Geschwindigkeitskomponenten der Strömung in dem ersten Zwischenraum und dem zweiten Zwischenraum liegen bevorzugterweise in einer Ebene, welche parallel zur Deckscheibe verläuft.

Beim Durchströmen der transparenten Wärmedämmung kann der Wärmeträger die von dem Absorber abgestrahlte und sich in Richtung der Deckscheibe ausbreitende Wärme aufnehmen. Der erste Zwischenraum verfügt dafür über einen Einlass, während der zweite Zwischenraum einen Auslass aufweist. Dieser Mechanismus wird als Wärmedämmungskreislauf bezeichnet. Das Wort Kreislauf soll zum Ausdruck bringen, dass der Wärmeträger der aus dem zweiten Zwischenraum abströmt dem ersten Zwischenraum wieder zugeführt wird. Dies kann unmittelbar geschehen, indem der Auslass des zweiten Zwischenraums mit dem Einlass des ersten Zwischenraums verbunden ist, vorzugsweise durchläuft der Wärmeträger jedoch wenigstens einen weiteren Kreislauf, bevor er wieder in den ersten Zwischenraum einströmt. Dieser wenigstens eine weitere Kreislauf kann beispielsweise ein Absorberkreislauf und/oder ein Wärmerückführungskreislauf sein.

Die transparente Wärmedämmung umfasst wenigstens zwei Elemente, wobei die Elemente streifenförmig oder rohrförmig oder stäbchenförmig ausgebildet sein können. Die einzelnen Elemente der transparenten Wärmedämmung bilden zusammen eine Platte die transparente Wärmedämmung aus, welche parallel zu der Deckscheibe verläuft. Die Elemente sind in Breitenrichtung und/oder Längenrichtung des Solarkollektors nebeneinander angeordnet, so dass zwischen den Elementen wenigstens ein fluidkommunizierender Durchgang ausgebildet ist, der sich von der strahlungsquellenzugewandten Seite der transparenten Wärmedämmung in Richtung der strahlungsabgewandten Seite der transparenten Wärmedämmung erstreckt.

In bevorzugten Ausführungen handelt es sich bei den Elementen der transparenten Wärmedämmung um Streifen, deren Längsachsen parallel zu der Längsachse oder der Breitenachse des Solarkollektors verlaufen. Vorteilhafterweise weisen die Streifen ein Profil auf. So können die Streifen in ihrer Längsrichtung wellenförmig verlaufen, d.h. in Längsrichtung weisen die Streifen Erhebungen und/oder Vertiefungen auf, wobei die Streifen so angeordnet sind, dass die Vertiefungen eines Streifens auf die Erhebungen der benachbarten Streifen treffen. Je nach Profil der einzelnen Streifen ergibt sich in Blickrichtung von der strahlungsquellenzugewandten Seite auf die strahlungsquellenabgewandte Seite ein Profil aus Konturen, wobei die Konturen polygonal oder kreisförmig ausgebildet sein können. Es können auch Streifen mit unterschiedlichen Profilen verwendet werden, z.B. im Wechsel wellenförmige und gerade Streifen.

In alternativen Ausführungen kann die transparente Wärmedämmung auch aus einem geschäumten bzw. porigen fluiddurchlässigen Kunststoff, wie z.B. Schwämme oder Filter, hergestellt sein. Ein wesentliches Merkmal der transparenten Wärmedämmung ist, dass ein Fluid aus dem ersten Zwischenraum durch die transparente Wärmedämmung in den zweiten Zwischenraum strömen kann. Die Strömungsrichtung ist dabei vorzugsweise senkrecht zu der Deckscheibe.

In bevorzugten Ausführungen bestehen die Elemente der transparenten Wärmedämmung aus einem Kunststoff, z.B. aus Polycarbonat, Acrylglas oder PET. Durchströmt ein Wärmeträger die transparente Wärmedämmung, werden die Elemente der transparenten Wärmedämmung fast völlig transparent.

Unterhalb der transparenten Wärmedämmung ist bevorzugt eine den zweiten Zwischenraum begrenzende Zwischenschicht ausgebildet. In der bevorzugten Ausführung wird die Zwischenschicht durch eine Hohlkammerplatte gebildet, wobei die Längsachse der einzelnen Hohlkammern parallel zu der Längsachse des Solarkollektors oder zu der Breitenachse des Solarkollektors verlaufen. Die Hohlkammerplatte hat in Länge und Breite die gleichen Abmessungen wie die transparente Wärmedämmung. An den längsseitigen oder breitseitigen Enden der Hohlkammerplatte, der Ausrichtung der einzelnen Hohlkammern entsprechend, sind Fluidanschlüsse für die offenen Enden der Hohlkammern ausgebildet. Die Fluidanschlüsse können in Form einer Nut im Gehäuse ausgebildet sein. Es kann aber auch eine Fluidgalerie an den längsseitigen oder breitseitigen Enden der Hohlkammerplatte, der Ausrichtung der einzelnen Hohlkammern entsprechend, angebracht sein, wobei von der Galerie zu jeder Öffnung der Hohlkammer der Hohlkammerplatte ein Zufluss oder ein Abfluss führt, so dass die Hohlkammerplatte parallel zu der Längsachse des Solarkollektors oder parallel zu der Breitenachse des Solarkollektors durchströmt wird. Der Verlauf der Hohlkammern der Hohlkammerplatte bestimmt die Strömungsrichtung des Wärmeträgers, d.h. ob der Wärmeträger in Richtung der Längsachse des Solarkollektors oder in Richtung der Breitenachse des Solarkollektors strömt. Die Hohlkammerplatte ist aus einem transparenten Material gebildet, vorzugsweise Kunststoff.

In einer alternativen Ausführung kann die Zwischenschicht auch von zwei, vorzugsweise, ebenen Platten gebildet werden, welche in einem Abstand in Tiefenrichtung des Solarkollektors parallel zueinander angeordnet sind. Die Platten verlaufen dabei zueinander und zu der Deckscheibe parallel. D.h. die Zwischenschicht wird von zwei, vorzugsweise ebenen, Platten gebildet, deren Längsachsen parallel zu der Längsachsachse der Deckscheibe und deren Breitenachsen parallel zu der Breitenachse der Deckscheibe verlaufen. Die beiden Platten sind in Tiefenrichtung des Solarkollektors voneinander beabstandet. Der Abstand der beiden Platten ist so bemessen, dass ein Wärmeträger zwischen ihnen hindurchströmen kann. Wobei die Strömungsrichtung parallel zu der Längsachse des Solarkollektors oder parallel zu der Breitenachse des Solarkollektors verläuft. Zu diesem Zweck befindet sich an einem längsseitigen Ende oder einem breitseitigen Ende der Zwischenschicht ein Einlass und auf der dem Einlass gegenüberliegenden Seite ein Auslass, durch welchen der Wärmeträger in den Raum zwischen den beiden Platten einströmen und ausströmen kann. Die Platten sind vorzugsweise aus einem transparenten Material, wie z.B. Glas oder Acrylglas, gebildet.

Bei einem schräg aufgestellten Solarkollektor, z.B. auf einem Hausdach, durchströmt der Wärmeträger die Zwischenschicht bevorzugt von dem oberen Ende der Schräge zu dem unteren Ende der Schräge. Auf diese Weise kann der Wärmeträger durch die Zwischenschicht mit Hilfe der Schwerkraft gefördert werden.

In einer dritten Alternative wird die Zwischenschicht von einer einzelnen Platte gebildet. Die Platte verläuft zu der Deckscheibe parallel. D.h. die Zwischenschicht wird von einer Platte gebildet, deren Längsachse parallel zu der Längsachsachse der Deckscheibe und deren Breitenachse parallel zu der Breitenachse der Deckscheibe verlaufen. Die Platte ist aus einem transparenten Material, wie z.B. Glas oder Acrylglas, gebildet. Die Platte der Zwischenschicht ist an der strahlungsquellenabgewandten Seite mit einer Strukturierung oder einer dünnen Schicht fasrigen Materials versehen. Die Strukturierung bzw. die Beschichtung der Platte mit einem fasrigen Material soll ein gleichmäßiges Herabfließen von Fluid entlang der Platte begünstigen. Bei dieser Bauform muss der Solarkollektor entsprechend schräg aufgestellt sein, so dass der Wärmeträger an der Platte herabsickern kann.

Die Wärme des Wärmeträgers aus der Zwischenschicht wird entweder an den Wärmeträger des Wärmedämmungskreislaufes oder an den Wärmeträger des Absorberkreislaufes abgegeben. Somit ist die Zwischenschicht Bestandteil des Wärmerückführungskreislaufs. In die Zwischenschicht wird der Wärmeträger, der aus dem zweiten Zwischenraum entnommen wurde - und entweder nach dem ersten Ausführungsbeispiel den Absorberkreislauf mit anschließender Nutzwärmeabgabe durchlaufen hat - oder nach dem zweiten Ausführungsbeispiel Wärme an den Absorberkreislauf abgegeben hat - eingefüllt und durchströmt die Zwischenschicht unter Wärmeabgabe an den darüber befindlichen Zwischenraum bzw. die transparente Wärmedämmung. Insofern ist die Zwischenschicht Teil des Wärmerückführungskreislaufes.

Eine Strukturierung oder dünne Schicht fasrigen Materials kann auch bei den davor erwähnten Ausführungen vorgesehen sein. Diese Strukturierung oder dünne Schicht fasrigen Material ist dabei an der strahlungsquellenabgewandten Seite der Zwischenschicht angebracht. Besteht die Zwischenschicht beispielsweise aus zwei Platten bedeutet dies, dass sich die Strukturierung oder die dünne Schicht fasrigen Materials an der strahlungsquellenabgewandten Seite der Platte befindet, welche den von der Deckscheibe größten Abstand aufweist.

In den Ausführungen bei denen die strahlungsquellenabgewandte Seite der Zwischenschicht eine Strukturierung oder dünne Schicht fasrigen Materials aufweist, ist die strahlungsquellenabgewandte Seite Teil des Absorberkreislaufes, während die strahlungsquellenzugewandte Seite der Zwischenschicht Teil eines Wärmerückführungskreislaufes ist.

Der Wärmeträger des Absorberkreislaufes sickert bevorzugt an der strahlungsquellenabgewandten Seite der Zwischenschicht hinunter und wird verdampft. Dies geschieht indem an der strahlungsquellenzugewandten Seite der Zwischenschicht der erwärmte Wärmeträger des Wärmerückführungskreislaufes entlangströmt, vorzugsweise innerhalb des zweiten Zwischenraums, und seine Wärme an den auf der strahlungsquellenabgewandten Seite der Zwischenschicht herabsickernden Wärmeträger des Absorberkreislaufes abgibt. Der herabsickernde Wärmeträger des Absorberkreislaufes wird durch die abgestrahlte Wärme des Absorbers und der zugeführten Wärme aus dem Wärmerückführungskreislaufs verdampft.

Von der Zwischenschicht in die strahlungsquellenabgewandte Richtung beabstandet befindet sich der Absorber. Der Raum zwischen dem Absorber und der Zwischenschicht ist mit wenigstens einem Gas gefüllt. Das Gas in dem Raum zwischen dem Absorber und der Zwischenschicht kann gewöhnliche Luft sein. Bei Ausführungsformen, bei welchen die strahlungsquellenabgewandte Seite der Zwischenschicht Teil des Absorberkreislaufes ist, ist der Raum zwischen dem Absorber und der Zwischenschicht mit den verdampften Anteilen des Wärmeträgers des Absorberkreislaufes gefüllt.

Der Absorber wird durch eine, die Strahlungsenergie der Strahlungsquelle absorbierende Schicht bzw. Platte, gebildet. Absorber sind aus dem Stand der Technik hinlänglich bekannt. Auf der strahlungsquellenabgewandten Seite des Absorbers verlaufen Rohrleitungen, in denen der Wärmeträger des Absorberkreislaufes hindurchströmt und die absorbierte Wärme des Absorbers aufnimmt. Bei Ausführungsformen, bei welchen die strahlungsquellenabgewandte Seite der Zwischenschicht Teil des Absorberkreislaufes ist und der Raum zwischen dem Absorber und der Zwischenschicht mit den verdampften Anteilen des Wärmeträgers des Absorberkreislaufes gefüllt ist, entfallen bevorzugt die Rohrleitungen und werden durch einen weiteren von der strahlungsquellenabgewandten Seite des Absorbers und der strahlungsquellenzugewandten Seite des Gehäuses begrenzten Raum ersetzt. In der zuletzt genannten Ausführungsform befinden sich über die Fläche des Absorbers verteilte Durchgangsöffnungen, durch welche der verdampfte Wärmeträger des Absorberkreislaufes aus dem Raum zwischen dem Absorber und der Zwischenschicht abgezogen wird.

Der erwärmte und gegebenenfalls verdampfte Wärmeträger des Absorberkreislaufes wird bevorzugt über Rohrleitungen zu einem externen Wärmetauscher als Nutzwärme abgegeben.

Die genaue Funktionsweise des Solarkollektors soll an Hand der Figuren 1 bis 5 genauer erörtert werden.
Figur 1 zeigt den prinzipiellen Aufbau des Solarkollektors in einer räumlichen Ansicht
Figur 2 zeigt einen Schnitt durch einen Solarkollektor, bei welchem Wärmedämmungskreislauf, Wärmerückführungskreislauf und Absorberkreislauf fluidkommunizierend arbeiten.
Figur 3 zeigt einen Schnitt durch einen Solarkollektor, bei welchem der Absorberkreislauf über einen Wärmetauscher mit dem Wärmedämmungskreislauf verbunden ist.
Figur 4 zeigt einen Schnitt durch einen Solarkollektor, bei welchem der Wärmeträger des Absorberkreislaufes an der strahlungsquellenabgewandten Seite der Zwischenschicht verdampft.
Figur 5 zeigt einen schematischen Aufbau der transparenten Wärmedämmung.

Der erfindungsgemäße Solarkollektor kann in verschiedenen Bauarten gebaut sein:
Erstens: mit einem gemeinsamen Kreislauf, bei welchem Wärmedämmungskreislauf, Wärmerückführungskreislauf und Absorberkreislauf fluidkommunizierend arbeiten,
zweitens: mit zwei Kreisläufen, wobei der eine um die transparente Wärmedämmung zirkuliert und der andere um den Absorber und
drittens: ebenfalls mit zwei Kreisläufen, wobei im Absorber-Kreislauf ein verdampfbarer Wärmeträger an der Rückseite der hinteren Abdeckung der transparenten Wärmedämmung herab sickert.

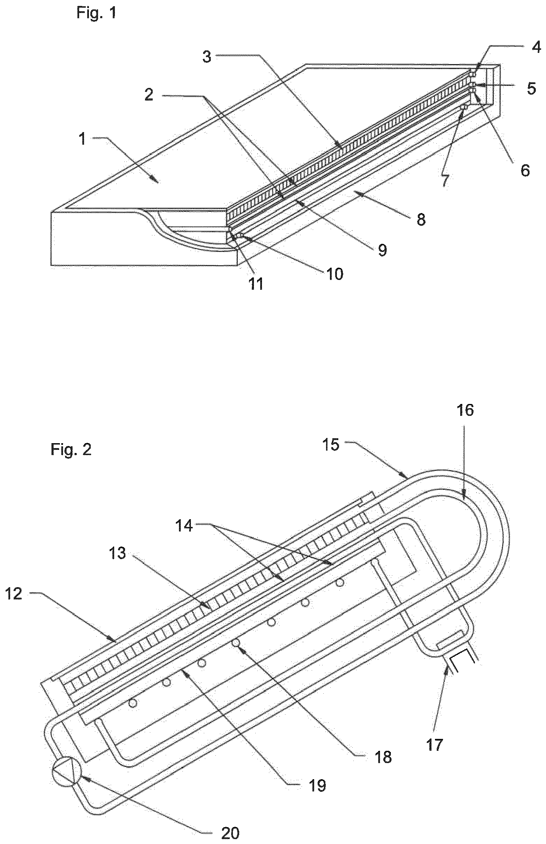

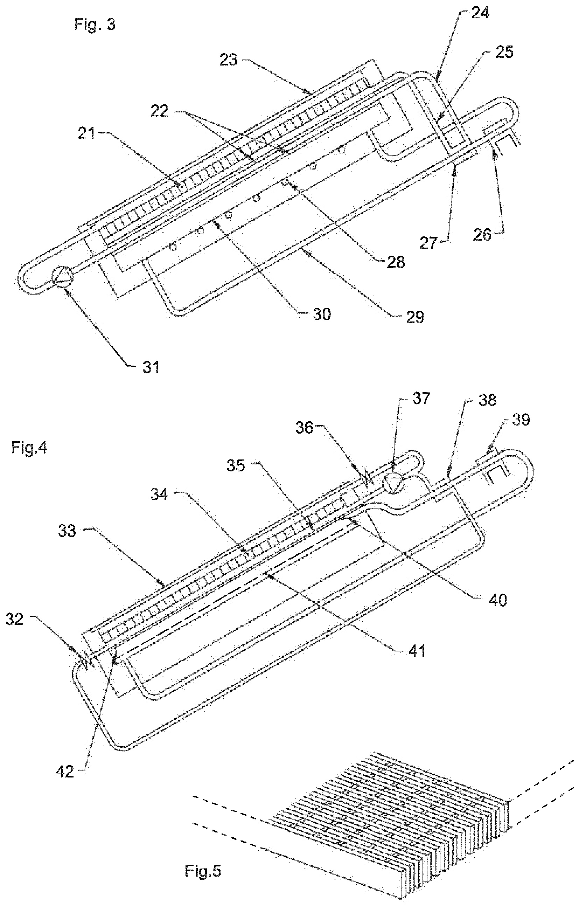

Nach der schematischen Zeichnung von Fig. 1 enthält ein mit einer Deckscheibe 1 aus Glas oder einem transparenten Kunststoff abgedeckter und mit einer Wärmedämmung 8 versehener Solarkollektor eine transparente Wärmedämmung 3, die aus verschiedenen Materialien bestehen kann und mit einem flüssigen Wärmeträger gefüllt ist. Die Wärmedämmung 8 umgibt den Solarkollektor längsseitig, breitseitig und an seiner strahlungsquellenabgewandten Seite. Als Material für die Wärmedämmung 3 kann z.B. eine Platte verwendet werden, die nach der schematischen Darstellung von Fig. 5 aus Kunststoffstreifen z.B. aus Polycarbonat, Acrylglas oder PET zusammengesetzt ist, wobei die einzelnen Streifen durch einen schmalen Zwischenraum getrennt sind.

Der Zwischenraum zwischen den Streifen kann dadurch zustande kommen, dass die Kunststoffstreifen ein geeignetes Profil aufweisen, z.B. Erhebungen oder Vertiefungen, die in der Richtung des einfallenden Lichtes verlaufen.. Bei einer Füllung mit dem flüssigen Wärmeträger werden die Kunststoffstreifen fast völlig transparent.

Oberhalb und unterhalb, d.h. auf der strahlungsquellenzugewandten und auf der strahlungsquellenabgewandten Seite, der transparenten Wärmedämmung 3 befindet sich ein erster Zwischenraum und ein zweiter Zwischenraum, durch den der Wärmeträger über eine Rohrleitung, welche mit entsprechenden Öffnungen 4, 5 verbunden ist, eingefüllt bzw. entnommen werden kann. Wenn die transparente Wärmedämmung sowie die Zwischenräume oberhalb und unterhalb der transparenten Wärmedämmung mit dem flüssigen Wärmeträger gefüllt sind, werden die Kunststoffstreifen fast völlig transparent

Die beschriebene Anordnung der transparenten Wärmedämmung 3 mit dem oberhalb der transparenten Wärmedämmung 3 angeordnetem ersten Zwischenraum und dem unterhalb der transparenten Wärmedämmung 3 angeordnetem zweiten Zwischenraum, sowie die Füllung durch den Wärmeträger wird nach hinten, d.h. in Richtung der strahlungsquellenabgewandten Seite, durch eine Hohlkammerplatte 2 z.B. aus Polycarbonat abgedeckt, wobei die Hohlkammern mit ihrer Längsachse in Strömungsrichtung angeordnet sind. Die Strömungsrichtung ist bei dem gezeigten Solarkollektor in Längsrichtung des Solarkollektors. Es ist aber auch vorstellbar, dass der Wärmeträger, bei entsprechender Anordnung der Hohlkammerplatte 2 in Breitenrichtung des Solarkollektors strömt. Der Solarkollektor aus Fig. 1 und die Ausführungsbeispiele in den Fig. 2 bis 4 sind schräg installiert, d.h. die Längsachse des Solarkollektors schließt mit der horizontalen ein Winkel kleiner 90° ein. Kleiner 90° bedeutet, dass die Deckscheibe des Solarkollektors in Richtung der Strahlungsquelle zeigt.

Alternativ zu der Hohlkammerplatte 2 können auch zwei Platten aus Glas oder Kunststoff verwendet werden, zwischen denen ein Zwischenraum freigehalten ist. Bei der dritten Bauart aus Fig. 4 mit einem verdampfenden Wärmeträger im Absorber-Kreislauf genügt eine einfache Abdeckung aus Glas oder Kunststoff.

Im Folgenden wird bei der ersten und zweiten Ausführungsform aus Fig. 2 und Fig. 3 von der Verwendung einer Hohlkammerplatte als Zwischenschicht ausgegangen. Die bisher im Aufbau genannten, übereinander liegenden Bauteile: Deckscheibe 1, transparente Wärmedämmung 3 und Hohlkammerplatte 4 sind an den vier umlaufenden Seiten durch Platten und eine geeignete Dichtung, z.B. aus Silikon oder Gummi verschlossen.

Unterhalb der Hohlkammerplatte 2 befindet sich ein luftgefüllter Zwischenraum, der nach hinten durch einen selektiv wirkenden Absorber 9 abgeschlossen ist. Alternativ kann auch ein Gas oder Gasgemisch mit einer geringeren Wärmeleitfähigkeit als Luft verwendet werden. Es ist auch möglich, den Raum zwischen der Hohlkammerplatte 2 und dem Absorber 9mit Unterdruck, insbesondere einem Vakuum zu beaufschlagen.

Hinter dem Absorber 9verläuft eine Rohrleitung mit einem Ein- und Auslass 7, 10, die mit dem Absorber 9 wärmeleitend verbunden ist, und die von dem Wärmeträger durchströmt wird.
Oder der Absorber ist nach Fig. 3 mit einer Perforation versehen, durch die Dampf in einen Raum unterhalb des Absorbers 9 strömen kann.

Figur 2 zeigt einen Schnitt durch einen Solarkollektor, bei welchem Wärmedämmungskreislauf, Wärmerückführungskreislauf und Absorberkreislauf fluidkommunizierend arbeiten, d.h. der Solarkollektor aus Fig. 2 arbeitet mit einem gemeinsamen Kreislauf. Nach der schematischen Querschnittszeichnung von Fig. 2 wird durch die einfallende Strahlung, insbesondere Sonnenstrahlung, der Wärmeträger erhitzt, der die Rohrleitung 18 hinter dem Absorber 19 durchströmt. Die Rohrleitung 18 hinter dem Absorber 19 führt zu einem Wärmetauscher 17. Dort gibt der Wärmeträger einen Teil seiner Wärme als Nutzwärme ab (im laufenden Betrieb die Menge an Wärme, die durch die Sonnenstrahlung im Solarkollektor erzeugt wird).

Anschließend wird der Wärmeträger in die Hohlkammerplatte 14 geleitet, die sich in einem gewissen Abstand oberhalb des Absorbers 19 befindet. Der Raum zwischen dem Absorber 19 und der Hohlkammerplatte ist mit Luft gefüllt. Der Einlass der Hohlkammerplatte 14 befindet sich an dem längsseitigen Ende des Solarkollektors, welches von der Horizontalen beabstandet ist, d.h. der Wärmeträger kann die Hohlkammerplatte auf Grund der Schwerkraft durchströmen.

Die Hohlkammerplatte 14 und der in ihr strömende Wärmeträger nehmen die Wärme auf, die durch Strahlung und Konvektion vom Absorber 19 übertragen wird. Die von dem Absorber 19 abgestrahlte bzw. übertragene Wärme breitet sich in Richtung der Deckscheibe 12 aus. In der Gegenrichtung zu der von dem Absorber 19 abgestrahlten bzw. übertragenen Wärme strömt der Wärmeträger, der von der Deckscheibe 12 her die transparente Wärmedämmung 13 durchdringt. Die in Richtung der Deckscheibe 12 abgestrahlte bzw. übertragene Wärme des Absorbers 19 wird damit bei gleicher Geschwindigkeit der Wärmeausbreitung und der Fließgeschwindigkeit des Wärmeträgers praktisch vollständig auf den Wärmeträger übertragen.

Nachdem der Wärmeträger durch die transparente Wärmedämmung 13 hindurch geströmt ist, strömt er durch den zweiten Zwischenraum unterhalb der transparenten Wärmedämmung 13 zu dem längsseitigen, von der horizontalen beabstandeten Ende, d.h. zu dem oberen Ende, des Solarkollektors, wird dort entnommen und über eine Rohrleitung 16 zu der Rohrleitung 18 hinter dem Absorber 19 geleitet. Beim Durchströmen der Rohrleitung 18 hinter dem Absorber erhält der Wärmeträger eine weitere Wärmezufuhr durch die Strahlung, insbesondere Sonnenstrahlung, die am Absorber absorbiert wird. Nachdem der Wärmeträger die Rohrleitung 18 hinter dem Absorber 19 durchströmt hat, wird er zu einem Wärmetauscher 17 geleitet, in dem er einen Teil seiner im Solarkollektor insgesamt aufgenommenen Wärme als Nutzwärme abgibt. Der Teil der Wärme, welche nicht als Nutzwärme abgegeben wird, wird mit dem Wärmeträger in den Solarkollektor zurückgeleitet. Das geschieht dadurch, dass der Wärmeträger am oberen Ende des Solarkollektors in eine Zwischenschicht geleitet wird, welche Beispielsweise durch eine Hohlkammerplatte 14 gebildet wird. Beim Durchströmen der Zwischenschicht bzw. der Hohlkammerplatte 14 gibt der Wärmeträger fortschreitend Wärme an den von der Deckscheibe 12 her durch das Material der transparenten Wärmedämmung 13 strömenden Wärmeträger ab. Am unteren Ende der Hohlkammerplatte 14 wird der Wärmeträger entnommen und mit Hilfe einer Pumpe 20 über eine Rohrleitung 15 in den ersten Zwischenraum zwischen der Deckscheibe 12 und der transparenten Wärmedämmung 13 geleitet. Von dort kann der Wärmeträger erneut die transparente Wärmedämmung 13 durchströmen, wodurch der Kreislauf geschlossen wird. Als Wärmeträger kann Wasser oder eine Mischung mit einem Glykol oder ein mineralisches oder synthetisches Öl verwendet werden.

Die von dem flüssigen Wärmeträger durchströmte transparente Wärmedämmung 13 bewirkt, dass die vom Absorber 19 ausgehende Strahlung vollkommen absorbiert wird und keine Strahlungswärme vom Absorber 19 an die Umgebung abgestrahlt wird. Die Wärme, die sich durch Wärmeleitung durch das Material der transparenten Wärmedämmung 13 und den Wärmeträger hindurch ausbreitet, wird kontinuierlich auf den Wärmeträger übertragen, der in Gegenrichtung zu der sich ausbreitenden Wärme strömt, sodass bei einem Gleichgewichtszustand der vom Absorber 19 abgegebenen Wärme und der von dem strömenden Wärmeträger aufgenommenen Wärme keine Wärmeverluste an die Umgebung auftreten.

Die Umwälzung des Wärmeträgers geschieht durch eine Thermosiphon-Wirkung und kann durch eine Pumpe 20 unterstützt werden. Die Thermosiphon-Wirkung kommt dadurch zustande, dass der Wärmeträger in dem zweiten Zwischenraum über dem Absorber 19 erwärmt wird. Er dehnt sich aus und sein spezifisches Gewicht sinkt. Der leichter gewordene Wärmeträger wird durch den weniger warmen und damit etwas schwereren Wärmeträger, der sich in dem ersten Zwischenraum unter der Deckscheibe 12 und in der transparenten Wärmedämmung 13 befindet, nach oben gedrängt. Wegen des erheblich größeren Strömungswiderstandes der transparenten Wärmedämmung 13 gegenüber dem übrigen System, in dem der Wärmeträger bewegt wird, kann die Strömung sich nur in der Richtung des Druckunterschiedes ausbreiten. D.h. der kältere und schwerere Wärmeträger aus dem ersten Zwischenraum unterhalb der Deckscheibe 12 und innerhalb der transparenten Wärmedämmung 13 verdrängt den wärmeren und leichteren Wärmeträger aus dem zweiten Zwischenraum unterhalb der transparenten Wärmedämmung 13. Da der Strömungswiderstand in der Rohrleitung 16 kleiner ist als der Strömungswiderstand in der transparenten Wärmedämmung 13 und auf Grund des temperaturbedingten Druckunterschieds zwischen dem ersten Zwischenraum und dem zweiten Zwischenraum fließt der Wärmeträger aus dem zweiten Zwischenraum über die Rohrleitung 16 ab.

Eine Konvektionsströmung kann sich nicht ausbilden. Ebenfalls verhindert wird ein Wärmetransport zur Deckscheibe. Das geschieht dadurch, dass der Wärmeträger in der Gegenrichtung zur sich ausbreitenden Wärme strömt.

Die Geschwindigkeit mit der der Wärmeträger durch die transparente Wärmedämmung 13 strömt, ist im Idealfall genauso groß wie die Geschwindigkeit der Wärmeausbreitung vom Absorber 19 in Richtung der Deckscheibe. Beide Geschwindigkeiten, d.h. die Strömungsgeschwindigkeit des Wärmeträgers durch die transparente Wärmedämmung 13 und die Geschwindigkeit, mit welcher sich die Wärme von dem Absorber 19 in Richtung der Deckscheibe 12 ausbreitet, nehmen vom kalten Ende zum heißen Ende des Kollektors zu, wobei sich das heiße Ende bei der beschriebenen Ausführungsform aus Fig. 2 am längsseitigen oberen Ende des Solarkollektors befindet und das kalte Ende bei der beschriebenen Ausführungsform aus Fig. 2 am längsseitigen unteren Ende des Solarkollektors. Um die optimale Strömungsgeschwindigkeit des Wärmeträgers zu gewährleisten, ist vorteilhafterweise ein regulierbarer Strömungswiderstand an einer Stelle der Rohrleitungen angebracht. Um eine zum kalten Ende des Solarkollektors hin abnehmende Strömungsgeschwindigkeit des Wärmeträgers zu bewirken, können geeignete Strömungshindernisse in dem ersten Zwischenräumen oberhalb und in dem zweiten Zwischenraum unterhalb der transparenten Wärmedämmung 13 angebracht sein.

Von Vorteil ist, wenn der vom Wärmetauscher 17 kommende Wärmeträger am heißen Ende des Solarkollektors einströmt. Dadurch kann die noch mitgeführte Restwärme, die der Wärmeträger in den Hohlkammern der Hohlkammerplatte 14 oder bei Ausführungen mit zwei Platten in dem Zwischenraum zwischen den Platten 14 noch inne hat und welche durch den Wärmetauscher 17 nicht mehr tauschbar bzw. abführbar ist, zum Teil genutzt werden. Ein Teil der Restwärme wird von dem durch die transparente Wärmedämmung 13 in dem zweiten Zwischenraum strömenden Wärmeträger mitgenommen und bleibt dem System erhalten, während ein anderer Teil als Verlust an die Umgebung abgegeben wird.

Alternativ kann der Wärmeträger aber auch am kalten Ende des Solarkollektors in den Zwischenraum unter der Deckscheibe einströmen. Die Begriffe kaltes Ende und warmes Ende beziehen sich nicht auf den Temperaturunterschied zwischen der Deckscheibe und dem Absorber, also zwischen der strahlungsquellenzugewandten Seite des Solarkollektors und der strahlungsquellenabgewandten Seite des Solarkollektors, sondern auf den Temperaturunterschied zwischen den längsseitigen Enden des Solarkollektors. Bei dem Ausführungsbeispiel aus Figur 2 nimmt die Temperatur in der Zwischenschicht von dem längsseitigen unteren Ende in Richtung des längsseitigen oberen Endes zu. Von Vorteil ist in diesem Fall, dass die Durchflussmenge des Wärmeträgers durch die transparente Wärmedämmung 13 weitgehend unabhängig von ihrem Strömungswiderstand durch Strömungswiderstände in dem ersten Zwischenraum und/oder in dem zweiten Zwischenraum über und unter der transparenten Wärmedämmung 13 geregelt werden kann.

Der Temperaturunterschied zwischen der Deckscheibe 12 und der hinteren Abdeckung der transparenten Wärmedämmung durch die Zwischenschicht in Form einer Hohlkammerplatte 14 hängt davon ab, wie dick die transparente Wärmedämmung 13 ist und aus welchem Material die transparente Wärmedämmung 13 besteht.

Der Temperaturunterschied ist bei einem 1 cm starken Material der transparenten Wärmedämmung 13 und einem Wärmedurchgangskoeffizienten von etwa 2 [W/(m²K)] nicht groß und für viele Anwendungen im Brauchwasserbereich und vor allem im Prozesswärmebereich zu gering. Durch die Wärmerückführung über die Zwischenschicht 14 kann die Temperatur des in die Rohrleitung 18 des Absorbers 19 strömenden Wärmeträgers um ein Vielfaches erhöht werden.

Das geschieht durch die Rückführung des Wärmeträgers in die Zwischenschicht bzw. Hohlkammerplatte 14 und durch eine Durchfluss-Geschwindigkeit, die den Wärmedurchgang durch die transparente Wärmedämmung 13 kompensiert. Die Durchfluss-Geschwindigkeit durch die transparente Wärmedämmung 13 muss zu diesem Zweck von der kalten Seite des Solarkollektors zur heißen Seite hin ansteigen. Unter der Durchfluss-Geschwindigkeit wird die Strömungsgeschwindigkeit des Wärmeträgers durch die Durchlässe zwischen den einzelnen Elementen der transparenten Wärmedämmung 13 verstanden. Da die Temperatur in dem zweiten Zwischenraum in Strömungsrichtung, d.h. in Richtung des längsseitig oberen Endes des Solarkollektors, zunimmt, muss auch die Durchfluss-Geschwindigkeit durch die transparente Wärmedämmung 13 zunehmen, damit ein Gleichgewicht zwischen der Wärmeausbreitung in Richtung der Deckscheibe und der Strömungsgeschwindigkeit des Wärmeträgers in der Gegenrichtung hergestellt wird. Wenn die Durchfluss-Geschwindigkeit durch die transparente Wärmedämmung 13 an der heißen Seite beispielsweise um das 5-fache höher ist gegenüber der kalten Seite, beträgt die mittlere Durchfluss-Geschwindigkeit durch die transparente Wärmedämmung 13 das 2,5-fache. Wenn der Temperaturunterschied zwischen der Deckscheibe 12 und der strahlungsquellenabgewandten Seite der Zwischenschicht 14 der transparenten Wärmedämmung beispielsweise 20° C beträgt, kann die Temperatur an der strahlungsquellenabgewandten Seite der Zwischenschicht 14 einen Wert von 100° C annehmen. Am Absorber wird die Temperatur dann noch weiter erhöht und kann je nach Bauart des Kollektors Werte von 200-300° C erreichen.

Figur 3 zeigt einen Schnitt durch einen Solarkollektor, bei welchem der Absorberkreislauf über einen Wärmetauscher mit dem Wärmedämmungskreislauf verbunden ist. Anhand der schematischen Zeichnung Fig. 3 lässt sich erkennen, dass zwei getrennte Kreisläufe von Wärmeträgern vorhanden sind: ein Wärmedämmungs-Kreislauf und ein Absorber-Kreislauf. Der Aufbau des Solarkollektors in Figur 3 entspricht im Wesentlichen dem vorherergangenen Ausführungsbeispiel. Der Solarkollektor umfasst eine Deckscheibe 23, eine transparente Wärmedämmung 21, welche von einem ersten Zwischenraum und einem zweiten Zwischenraum eingefasst ist, eine Zwischenschicht 22 in Form einer Hohlkammerplatte und einen Absorber 30. Der Unterschied liegt in den Verbindungen der einzelnen Schichten und dem damit einhergehenden Fluss des Wärmeträgers. Zudem verfügt der Solarkollektor über zwei getrennte Kreisläufe, in denen jeweils Wärmeträger zirkuliert. Als Wärmeträger in den beiden Kreisläufen kann dasselbe Fluid verwendet werden, es besteht aber auch die Möglichkeit zwei unterschiedliche Fluide zu verwenden, da die beiden Kreisläufe nicht fluidkommunizierend miteinander verbunden sind.

Im Wärmedämmungs-Kreislauf strömt der Wärmeträger aus dem ersten Zwischenraum unter der Deckscheibe 23 durch die transparente Wärmedämmung 21 und wird aus dem zweiten Zwischenraum unter der transparenten Wärmedämmung 21 über eine Rohrleitung 25 weggeführt. Der Auslass aus dem zweiten Zwischenraum befindet sich am längsseitigen, oberen Ende des Solarkollektors, d.h. der Wärmeträger strömt innerhalb des zweiten Zwischenraums gegen die Schwerkraft. Dies ist, wie im Vorfeld beschrieben, durch die Thermosiphon-Wirkung möglich. Das bedeutet innerhalb des zweiten Zwischenraums gibt es einen Temperaturunterschied zwischen dem längsseitigen oberen Ende und dem längsseitigen unteren Ende. Über die Rohrleitung 25, welche am längsseitigen oberen Ende des Solarkollektors mit dem zweiten Zwischenraum fluidkommunizierend verbunden ist, gelangt der Wärmeträger zu einem Wärmetauscher 27, in dem er einen Teil seiner Wärme an den Absorber-Kreislauf abgibt. Dabei sinkt bei einem Betrieb des Kollektors mit kontinuierlicher Wärmeentnahme die Temperatur des Wärmeträgers im Wärmedämmungs-Kreislauf auf einen Wert unterhalb der Temperatur mit der der Wärmeträger aus dem zweiten Zwischenraum unter der transparenten Wärmedämmung 21 entnommen wurde. Beim Beginn des Betriebs des Kollektors hat die zurückgeführte Wärme dagegen eine höhere Temperatur.
Die Rückführung des Wärmeträgers mit höherer Temperatur dauert so lange, bis die gewünschte Betriebstemperatur erreicht ist.

Über eine Rohrleitung 24 wird der Wärmeträger von dem Wärmetauscher 27 zu der Zwischenschicht 22 transportiert. Die Zwischenschicht 22 ist in bevorzugten Ausführungen, wie bei dem vorhergehenden Ausführungsbeispiel, als Hohlkammerplatte ausgebildet. Beim Einströmen in die Hohlkammerplatte 22 nimmt darum bei einem kontinuierlichen Betrieb der Wärmeträger zunächst Wärme auf. Die aufgenommene Wärme kann sowohl von dem Wärmeträger aus dem zweiten Zwischenraum stammen als auch durch die Wärmeabstrahlung des Absorbers 30 bedingt sein. Im weiteren Verlauf aber gibt der Wärmeträger, der durch die Hohlkammerplatte 22 strömt, Wärme an den Wärmeträger ab, der in dem zweiten Zwischenraum unter der transparenten Wärmedämmung 21 strömt. Die Strömungsrichtung des Wärmeträgers innerhalb der Zwischenschicht ist dabei entgegengesetzt zu der Strömungsrichtung in dem zweiten Zwischenraum unterhalb der transparenten Wärmedämmung 21. Nachdem der Wärmeträger die Hohlkammerplatte 22 durchströmt hat, wird er mit Hilfe einer Pumpe 31 in den ersten Zwischenraum unter der Deckscheibe 23 geleitet. Von dort durchströmt er von neuem die transparente Wärmedämmung 21, womit dieser Kreislauf geschlossen ist.

Der vom Wärmedämmungs-Kreislauf getrennte Absorber-Kreislauf besteht aus der mit dem Absorber 30 wärmeleitend verbundenen Rohrleitung 28, einem Wärmetauscher 26 zur Entnahme der Nutzwärme und einer Rohrleitung 29, die die Wärmetauscher 26, 27 mit der Rohrleitung 28 hinter dem Absorber 30, d.h. auf der strahlungsquellenabgewandten Seite des Absorbers 30, verbindet. Der Absorber-Kreislauf kann entweder mit einer im Vergleich zum Wärmedämmungs-Kreislauf hoch siedenden Flüssigkeit oder mit einer zu verdampfenden Flüssigkeit betrieben werden. Die Umwälzung erfolgt bei der hoch siedenden Flüssigkeit durch den Thermo-Siphon-Effekt, eventuell mit Unterstützung durch eine Pumpe und bei der verdampfbaren Flüssigkeit durch die Wirkung der Schwerkraft.

Wenn eine zu verdampfende Flüssigkeit als Wärmeträger im Absorber-Kreislauf gewählt wird, befindet sich diese in geringer Menge im unteren Teil der Rohrleitung 29, die von den Wärmetauschern 26, 27 herkommt. Als zu verdampfende Flüssigkeit kann Wasser oder eine andere Flüssigkeit dienen oder eine Mischung von Flüssigkeiten mit unterschiedlich hohem Siedepunkt. In letzteren Fall verdampfen je nach der Temperatur, die am Absorber 30 herrscht, die niedrig siedenden Anteile der zu verdampfenden Flüssigkeit zuerst und die höher siedenden Anteile bei steigenden Temperaturen. Die erhitzte Flüssigkeit bzw. der erzeugte Dampf gelangen in einen ersten Wärmetauscher 26, in dem sie Nutzwärme abgeben. Die Temperatur des Wärmeträgers hat danach einen Wert etwas unterhalb der Temperatur, mit der der Wärmeträger aus dem zweiten Zwischenraum unter der transparenten Wärmedämmung 22 entnommen wird. Anschließend strömt der Wärmeträger durch einen weiteren Wärmetauscher 27, der auf der Gegenseite mit dem Wärmedämmungs-Kreislauf verbunden ist. Dort erhält der Wärmeträger, der vom ersten Wärmetauscher 26 herkommt, Wärme von dem im Wärmedämmungs-Kreislauf strömenden Wärmeträger.

Bei einem Betrieb mit einer verdampfbaren Flüssigkeit ist in die Rohrleitung 29, die zur Rohrleitung 28 hinter dem Absorber 30 führt, vorteilhaft ein Druckausgleichsgefäß eingefügt, das den entstehenden Dampfdruck durch seinen größeren Rauminhalt verringert.

Figur 4 zeigt einen Schnitt durch einen Solarkollektor, bei dem der Wärmeträger des Absorberkreislaufes an der strahlungsquellenabgewandten Seite der Zwischenschicht verdampft. Der dargestellte Solarkollektor arbeitet wie der Solarkollektor aus Fig. 3 mit zwei Kreisläufen. Der Wärmedämmungs-Kreislauf und der Wärmerückführungs-Kreislauf sind hier, ähnlich wie bei dem vorhergehenden Ausführungsbeispiel, durch einen gemeinsamen Kreislauf ersetzt. In dem vorhergehenden Ausführungsbeispiel werden die transparente Wärmedämmung und die Zwischenschicht allerdings nacheinander von dem Wärmeträger durchströmt, während in dem Ausführungsbeispiel aus Figur 4 der am längsseitig oberen Ende des Solarkollektors unterhalb der transparenten Wärmedämmung 34 entnommene Wärmeträger in zwei Richtungen weiter transportiert wird: einmal über ein Drosselventil 36 in den ersten Zwischenraum unter der Deckscheibe 33 und zum anderen über einen Wärmetauscher 38 und ein Drosselventil 32in den zweiten Zwischenraum unterhalb der transparenten Wärmedämmung 34.

Der Absorber-Kreislauf ist mit diesem gemeinsamen Kreislauf aus Wärmedämmungs-Kreislauf und Wärmerückführungs-Kreislauf über einen Wärmetauscher 38 verbunden. Das heiße und das kalte Ende des Solarkollektors sind gegenüber den vorher dargestellten Bauarten vertauscht. Das heiße Ende des Solarkollektors befindet sich bei dem Ausführungsbeispiel in Figur 4 an dem längsseitigen unteren Ende des Solarkollektors und das kalte Ende des Solarkollektors ist an dem längsseitigen oberen Ende des Solarkollektors.

Der Aufbau des Solarkollektors in Figur 4 unterscheidet sich von den vorherergangenen Ausführungsbeispielen insbesondere durch die Zwischenschicht, welche in dem gezeigten Ausführungsbeispiel aus Figur 4 durch eine einzelne, ebene Platte gebildet wird. Zudem verläuft auf der strahlungsquellenabgewandten Seite des Absorbers 41 keine Rohrleitung, sondern es erstreckt sich ein Raum, welcher mit dem Raum zwischen dem Absorber 41 und der Zwischenschicht 35 über kleine Durchgangsöffhungen im Absorber verbunden ist.

Der gemeinsame Wärmedämmungs- und Wärmerückführungs-Kreislauf funktioniert auf die folgende Weise. Der Wärmeträger strömt aus dem ersten Zwischenraum unter der Deckscheibe 33 durch die transparente Wärmedämmung 34 hindurch in den zweiten Zwischenraum unter der transparenten Wärmedämmung 34. Von dort wird der Wärmeträger mit Hilfe einer Pumpe 37 in zwei Richtungen weitertransportiert. In der einen Richtung wird der Wärmeträger über ein einstellbares Drosselventil 36 in den Zwischenraum unter der Deckscheibe 33 geleitet, um von dort erneut durch die transparente Wärmedämmung 34 zu strömen. In der anderen Richtung strömt der Wärmeträger über einen Wärmetauscher 38 und über ein weiteres Drosselventil 32 in den Zwischenraum unter der transparenten Wärmedämmung 34, und zwar am längsseitigen unteren Ende des Solarkollektors.

Als Wärmeträger im gemeinsamen Wärmedämmungs- und Wärmerückführungs-Kreislauf eignen sich je nach dem Material der verwendeten Wärmedämmung 34 Wasser, eine wässrige Zuckerlösung, Glykol oder eine Mischung derselben. Der Absorber-Kreislauf hat die Besonderheit, dass eine Mischung von unterschiedlich hoch siedenden Flüssigkeiten wie z.B. von Alkoholen, Wasser, Glykolen oder mineralischen oder synthetischen Ölen an der Rückseite der strahlungsquellenabgewandten Seite der Zwischenschicht herab sickert.

Die Mischung der Flüssigkeiten wird über eine schwammartige Zuleitung 42 am längsseitigen oberen Ende der Zwischenschicht herangeführt. Die strahlungsquellenabgewandte Seite der Zwischenschicht ist vorteilhaft mit einer Strukturierung oder einer dünnen Schicht eines faserigen Materials versehen, die für ein gleichmäßiges Fließen des Wärmeträgers sorgt. Während des Herabsickerns verdampfen aus der Mischung der Flüssigkeiten zunächst die am niedrigsten siedenden Anteil und mit fortschreitender Entfernung von der Einfüllung und entsprechend der zunehmenden Temperatur des Absorbers 41 auch die höher siedenden Anteile.

Am längsseitigen unteren Ende der strahlungsquellenabgewandten Seite der Zwischenschicht ist eine Auffangwanne 42 angebracht, die vorteilhaft mit einem schwammartigen Material gefüllt ist.

Wenn der Kollektor außer Betrieb ist, sammelt sich in dieser Wanne die gesamte Menge der zu verdampfenden Flüssigkeit.

Zu Beginn des Betriebs, wenn der Absorber 41 durch die eingestrahlte Sonnenenergie erwärmt worden ist und Wärme abstrahlt, verdampfen zunächst Anteile der Flüssigkeit in einem Bereich, in dem die Flüssigkeit durch Kapillarwirkung in dem faserigen Belag der strahlungsquellenabgewandten Seite der Zwischenschicht aufsteigen kann. Nach einiger Zeit beginnt von dem längsseitigen oberen Ende der strahlungsquellenabgewandten Seite der Zwischenschicht her bereits kondensierte Flüssigkeit immer mehr herab zu sickern, bis die strahlungsquellenabgewandten Seite der Zwischenschicht vollständig benetzt ist.

Der durch Wärmeeinwirkung entstehende Dampf wird durch eine Vielzahl von kleinen Öffnungen im Absorber 41 abgezogen. Der Dampf strömt von dem längsseitigen oberen Ende zu dem längsseitigen unteren Ende durch einen Raum auf der strahlungsquellenabgewandten Seite des Absorbers 41 und wird am längsseitigen unteren Ende aus dem Solarkollektor herausgeleitet.

Der Dampf kondensiert zu einem Teil in einem ersten Wärmetauscher 39, in dem er Nutzwärme abgibt. Der restliche Anteil des Dampfes kondensiert in einem weiteren Wärmetauscher 38, der mit dem Wärmedämmungs- und Wärmerückführungs-Kreislauf verbunden ist. Die im zweiten Kreislauf, dem Absorber-Kreislauf, nicht kondensierten Anteile des Dampfes mögen in einem Ausgleichsgefäß gesammelt werden, das vorteilhaft in der Nähe der Zuleitung 38 in den Kreislauf eingefügt ist. Das Kondensat des zweiten Kreislaufes gelangt in die Zuleitung 40 am längseitigen oberen Ende der strahlungsquellenabgewandten Seite der Zwischenschicht, um von dort wieder herab zu sickern, womit der Kreislauf geschlossen ist.

Der von dem Wärmetauscher 38 herkommende und über das Drosselventil 32 in den zweiten Zwischenraum unter der transparenten Wärmedämmung 34 einströmende Wärmeträger vermischt sich mit dem aus dem ersten Zwischenraum über der transparenten Wärmedämmung 34 durch die transparente Wärmedämmung 34 strömenden Wärmeträger. Dabei gibt die entstandene Mischung des Wärmeträgers ihre im Wärmetauscher 38 des Absorber-Kreislaufs erhaltene Wärme, sowie die in der transparenten Wärmedämmung 34 erhaltene Wärme kontinuierlich an den auf der Rückseite herab sickernden und verdampfenden Wärmeträger ab. Damit wird ein großer Teil der Wärme übertragen, die zur Verdampfung nötig ist.

Der Vorteil dieser Konstruktion liegt darin, dass eine Konvektionsströmung im Zwischenraum vor dem Absorber 41 verhindert wird. Das geschieht dadurch, dass der an der strahlungsquellenabgewandten Seite der Zwischenschicht entstehende Dampf in annähernd senkrechter Richtung in Bezug auf den Absorber 41 zu diesem hinüberströmt und seine Strömungsgeschwindigkeit größer ist als eine mögliche Konvektionsströmung. Damit ist eine Übertragung von Wärme vom Absorber 41 zu der strahlungsquellenabgewandten Seite der Zwischenschicht nur noch durch Strahlung möglich. Der Anteil der Strahlung ist aber gegenüber anderen Arten der Übertragung von Wärme, die in Kollektoren zu Verlusten führen, vergleichsweise gering und damit kann die Temperatur am Absorber 39 gegenüber den vorher dargestellten Bauarten des Kollektors höhere Werte erreichen.

Bei dieser Bauart ist zusätzlich auch eine Verdichtung des Dampfes durch einen Verdichter möglich. Der Dampf kondensiert dabei schrittweise in den Wärmetauschern unter höherem Druck, sodass das Kondensat anschließend in einer Düse entspannt werden kann. Da der Dampf aus unterschiedlich hoch siedenden Flüssigkeiten besteht, kondensiert er bei unterschiedlichen Temperaturen und somit schrittweise in den Wärmetauschern. Die Verdampfungswärme, die bei der Entspannung und Verdampfung des Kondensats gebraucht wird, kann in einem Wärmetauscher oder beim Eintritt in den Solarkollektor zugeführt werden. Die Temperatur kann soweit absinken, dass über den Wärmetauscher oder über die Deckscheibe 33 Wärme aus der Umgebung aufgenommen werden kann.

## Patentansprüche

1. Solarkollektor, vorzugsweise in Flachbauweise, umfassend:
a) eine Deckscheibe (1; 12; 23; 33)
b) eine transparente Wärmedämmung (3; 13; 21; 34), wobei die transparente Wärmedämmung (3; 13; 21; 34) auf der strahlungsquellenabgewandten Seite der Deckscheibe (1; 12; 23; 33) angeordnet ist und wobei zwischen der transparenten Wärmedämmung (3; 13; 21; 34) und der Deckscheibe (1; 12; 23; 33) wenigstens ein erster Zwischenraum angeordnet ist,
c) einen Absorber, der auf der strahlungsquellenabgewandten Seite der transparenten Wärmedämmung (3; 13; 21; 34) angeordnet ist und dazu ausgelegt ist einfallende Strahlung zu absorbieren,
d) wobei zwischen dem Absorber (9; 19; 30; 41) und der transparenten Wärmedämmung (3; 13; 21; 34) wenigstens eine Zwischenschicht (2; 14; 22; 35) ausgebildet ist und wobei zwischen der transparenten Wärmedämmung (3; 13; 21; 34) und der Zwischenschicht (2; 14; 22; 35) wenigstens ein zweiter Zwischenraum angeordnet ist, **dadurch gekennzeichnet, dass**
e) die transparente Wärmedämmung (3; 13; 21; 34) den ersten Zwischenraum und den zweiten Zwischenraum fluidkommunizierend miteinander verbindet.

2. Solarkollektor nach dem vorherergehenden Anspruch, **dadurch gekennzeichnet, dass** die transparente Wärmedämmung (3; 13; 21; 34) aus einem Kunststoff besteht, insbesondere aus Polycarbonat, Acrylglas oder PET.

3. Solarkollektor nach dem vorhergehenden Anspruch, **dadurch gekennzeichnet, dass** die transparente Wärmedämmung (3; 13; 21; 34) aus wenigstens zwei Elementen ausgebildet ist, wobei die Elemente streifenförmig oder rohrförmig oder stäbchenförmig ausgebildet sind und wobei die Elemente in Breitenrichtung und/oder Längenrichtung des Solarkollektors nebeneinander angeordnet sind, so dass zwischen den Elementen wenigstens ein fluidkommunizierender Durchgang ausgebildet ist, der sich von der strahlungsquellenzugewandten Seite der transparenten Wärmedämmung (3; 13; 21; 34) in Richtung der strahlungsabgewandten Seite der transparenten Wärmedämmung (3; 13; 21; 34) erstreckt.

4. Solarkollektor nach einem der vorhergehenden Ansprüche, **dadurch gekennzeichnet, dass** die Zwischenschicht (2; 14; 22; 35) aus einer Hohlkammerplatte besteht, wobei Längsrichtung der einzelnen Hohlkammern parallel zu der Längsrichtung des Solarkollektors verläuft.

5. Solarkollektor nach einem der Ansprüche 1 bis 3, **dadurch gekennzeichnet, dass** die Zwischenschicht (2; 14; 22; 35) aus zwei, vorzugsweise ebenen, Platten gebildet wird, deren Längsachsen parallel zu der Längsachsachse der Deckscheibe (1; 12; 23; 33) und deren Breitenachsen parallel zu der Breitenachse der Deckscheibe (1; 12; 23; 33) verlaufen, wobei die beiden Platten in Tiefenrichtung des Solarkollektors voneinander beabstandet verlaufen.

6. Solarkollektor nach einem der Ansprüche 1 bis 3, **dadurch gekennzeichnet, dass** die Zwischenschicht (2; 14; 22; 35) aus einer, vorzugsweise ebenen, Platte gebildet wird, deren Achsen parallel zu den Achsen der Deckscheibe (1; 12; 23; 33) verlaufen.

7. Solarkollektor nach einem der vorhergehenden Ansprüche, **dadurch gekennzeichnet, dass** der Absorber (9; 19; 30; 41) von der Zwischenschicht (2; 14; 22; 35) in Tiefenrichtung des Solarkollektors beabstandet ist und der Raum zwischen dem Absorber (9; 19; 30; 41) und der Zwischenschicht (2; 14; 22; 35) mit wenigstens einem Gas gefüllt ist.

8. Solarkollektor nach dem vorhergehenden Anspruch, **dadurch gekennzeichnet, dass** der Absorber (9; 30, 41) wenigstens eine kleine Öffnung aufweist, über welche das wenigstens eine Gas aus dem Raum zwischen dem Absorber (9; 30, 41) und der Zwischenschicht (2; 14; 22; 35) strömen kann.

9. Solarkollektor nach einem der vorhergehenden Ansprüche, **dadurch gekennzeichnet, dass** der Solarkollektor wenigstens eine Rohrleitung aufweist, über welche ein Wärmeträger zu wenigstens einem externen Wärmetauscher (17; 26; 39) transportiert werden kann, in welchem der Wärmeträger einen Teil seiner Wärme als Nutzwärme abgibt.

10. Verfahren zur Erzeugung von Nutzwärme mit einem Solarkollektor in Flachbauweise,
a) wobei der Solarkollektor einen Absorberkreislauf und einen Wärmedämmungskreislauf umfasst,
b) wobei in dem Absorberkreislauf ein Absorber (9; 19; 30; 41) einem Wärmeträger Wärme zuführt und der Wärmeträger des Absorberkreislaufs seine Wärme über einen Wärmetauscher als Nutzwärme abführt,
**dadurch gekennzeichnet, dass**
c) in dem Wärmedämmungskreislauf ein Wärmeträger durch eine transparente Wärmedämmung (3; 13; 21; 34) strömt,
d) wobei der Wärmeträger des Wärmedämmungskreislaufs die transparente Wärmedämmung (3; 13; 21; 34) in Richtung senkrecht auf den Absorber (9; 19; 30; 41) zu durchströmt, und
e) wobei der Wärmeträger des Wärmedämmungskreislaufs die an dem Absorber (9; 19; 30; 41) entstehende Strahlungswärme bei ihrer Ausbreitung von dem Absorber (9; 19; 30; 41) in Richtung einer Deckscheibe (1; 12; 23; 33) aufnimmt.

11. Verfahren nach dem vorhergehenden Anspruch, **dadurch gekennzeichnet, dass** der Wärmedämmungskreislauf über einen Wärmerückführungskreislauf mit dem Absorberkreislauf verbunden ist.

12. Verfahren nach dem vorhergehenden Anspruch, **dadurch gekennzeichnet, dass** der Wärmerückführungskreislauf fluidkommunizierend mit dem Absorberkreislauf und/oder dem Wärmedämmungskreislauf verbunden ist.

13. Verfahren nach einem der vorhergehenden Ansprüche, **dadurch gekennzeichnet, dass** die Wärme des Wärmedämmungskreislaufs dem Wärmeträger des Absorberkreislaufs zugeführt wird.

14. Verfahren nach einem der vorhergehenden Ansprüche, **dadurch gekennzeichnet, dass** es sich bei dem Solarkollektor um einen Solarkollektor nach Anspruch 1 handelt.

15. Verfahren nach einem der vorhergehenden Ansprüche, **dadurch gekennzeichnet, dass** der Wärmeträger des Absorberkreislaufs eine Mischung aus bei unterschiedlich hoher Temperatur verdampfenden Flüssigkeiten ist und an der strahlungsabgewandten Seite der Zwischenschicht (35) herabsickert,
dass der Wärmeträger durch Wärmezufuhr vom Absorber (41) verdampft und der entstehende Dampf durch Öffnungen im Absorber (41) abgezogen wird,
dass der Dampf seine Wärme in einem Wärmetauscher (39) zur Gewinnung von Nutzwärme und/oder in einem weiteren Wärmetauscher (38) abgibt,
dass der Wärmedämmungskreislauf und der Wärmerückführungskreislauf miteinander verbunden sind,
dass der an dem längsseitig oberen Ende des Solarkollektors entnommene Wärmeträger in zwei Richtungen weitertransportiert wird: zum einen direkt in den ersten Zwischenraum unter der Deckscheibe (33) und zum anderen über einen Wärmetauscher (38) in die Zwischenschicht (35) unterhalb der transparenten Wärmedämmung (34).
